# EUROPÄISCHE PATENTANMELDUNG

(11) **EP 1 064 837 A1**
(43) Veröffentlichungstag der Anmeldung: **03.01.2001**
(21) Anmeldenummer: 00112179.7
(22) Anmeldetag: 07.06.2000
(51) Int. Cl.: A01D 61/00

(54) **Führungselement für einen Finger eines Förderers**

(30) Priorität: 29.06.1999 US 342463
(71) Anmelder: DEERE & COMPANY, Moline, Illinois 61265-8098 (US)
(72) Erfinder: Sheedy, Ronald Leo, Eldridge, IA 52748 (US); Wubben, Mark Leroy, Bettendorf, IA 52722 (US)
(74) Vertreter: Holst, Sönke, Dr.

(57) **Zusammenfassung**

Die Erfindung bezieht sich auf ein Führungselement (50) für einen Finger (42) eines Förderers, insbesondere eines Schneckenförderers (28), das in eine Öffnung (34) eines Rohrs (30) des Förderers einsetzbar ist. Um die Montage und Wartung des Führungselements (50) zu erleichtern, wird vorgeschlagen, dass das Führungselement (50) in der Öffnung (34) verrastbar ist. Dadurch wird separates Montagematerial eingespart. Vorzugsweise ist das Führungselement (50) derart geformt, dass es zwischen einer Einsetzposition, in der es in die Öffnung (34) einsetz- und daraus entnehmbar ist, und einer Rastposition, in der es in der Öffnung (34) arretiert ist, drehbar ist.

## Beschreibung

Die Erfindung betrifft ein Führungselement für einen Finger eines Förderers, insbesondere eines Schneckenförderers, das in eine Öffnung eines Rohrs des Förderers einsetzbar ist.

Schneidwerke werden verwendet, um landwirtschaftliches Gut abzuschneiden und es dem Schrägförderer eines Mähdreschers zuzuführen. Das Schneidwerk umfasst einen tragenden Rahmen, der mit einer Mäheinrichtung zum Abschneiden des Guts ausgestattet ist. Die Mäheinrichtung kann ein sich hin- und herbewegender Mähwerksbalken, eine rotierende Schneideinrichtung oder ein anderer Mechanismus zum Abschneiden des Guts sein. Das Gut fällt auf den Boden des Schneidwerks und wird durch einen sich quer erstreckenden Schneckenförderer zusammengeführt. Der Schneckenförderer ist mit äußeren Abschnitten mit wendelförmigen Mitnehmern versehen, um das Gut einem Mittelabschriitt ohne Mitnehmer zuzufördern. Der Mittelabschnitt ist mit einer Vielzahl von Öffnungen ausgestattet, durch die sich Einzugsfinger erstrecken. Die Einzugsfinger ergreifen das Gut und fördern es durch eine Öffnung in der Trägerstruktur in den Einlass des Schrägförderers des Mähdreschers.

Die Einzugsfinger sitzen auf einer versetzten Welle innerhalb des Schneckenfördererrohrs. Wenn sich das Rohr und die Finger drehen, bewegen sich die Finger radial aus dem Rohr nach innen und außen, um das Gut zu ergreifen oder loszulassen. Ein Führungselement ist in jeder Öffnung in der Wand des Rohrs des Schneckenförderers vorgesehen, durch welches sich je ein Finger erstreckt. In der Vergangenheit wurden die Führungselemente direkt an die Wand des Rohrs des Schrägförderers geschraubt oder durch eine Befestigungsklammer festgehalten, die an der Wand des Rohrs des Schrägförderers angeschraubt ist. Das Führungselement und die Befestigungselemente umfassen mehrere getrennte Komponenten. Der Zusammenbau und die Warfung dieser Komponenten ist sehr zeitaufwendig und teuer. Bei Feldbedingungen können Steine die Befestigungselemente der Führungselemente beschädigen. Wenn die Befestigungselemente beschädigt sind, lassen sie sich nur schwer entfernen. Häufig müssen die Befestigungselemente von dem Rohr des Schneckenförderers abgeschnitten werden, wobei auch das Rohr beschädigt werden kann.

Die der Erfindung zugrunde liegende Aufgabe wird darin gesehen, die Befestigung der Führungselemente eines Fingers an einem Rohr des Schneckenförderers zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, das Führungselement in der Öffnung verrastbar zu gestalten. Das Führungselement wird somit in die Öffnung eingesetzt und dort durch geeignete Mittel arretiert. Das Verrasten kann durch eine Clip-, Einschnapp- oder Drehverbindung erfolgen. Durch die Verwendung von Kunststoffmaterialien für das Führungselement ist es mit einer hinreichenden Elastizität herstellbar, die ein Verrasten unschwer ermöglicht.

Auf diese Weise erhält man ein Führungselement, das ohne Verwendung zusätzlichen Befestigungsmaterials am Rohr arretiert werden kann. In der Regel ist die Arretierung lösbar, oder das Führungselement zumindest ohne Beschädigung des Rohrs des Förderers aus der Öffnung entfernbar.

Vorzugsweise ist das Führungselement derart gestaltet, dass es in die Öffnung im Rohr des Förderers eingesetzt und dann in eine Rastposition gedreht wird, in der es arretiert ist. In der Rastposition ist ein Teil des Rohrs zwischen nach außen überstehenden Elementen des Führungselements eingeklemmt, so dass das Führungselement am Rohr fixiert ist. Die Drehung erfolgt in der Regel um eine Achse, die radial zur Längsachse des Rohrs des Förderers verläuft und der Achse des Fingers entspricht.

Vorzugsweise ist das Führungselement aus Gründen der Fertigungsvereinfachung einteilig gestaltet.

In einer bevorzugten Ausführungsform weist das Führungselement einen Mittelteil, der in einen mittleren Bereich der Öffnung eingesetzt wird, und wenigstens einen (oder mehrere) vom Mittelteil sich nach außen erstreckenden inneren Haltefinger auf. Letzterer ist derart geformt, dass er in der Einsetzposition des Führungselements durch einen sich von der Öffnung nach außen erstreckenden Flügelabschnitt der Öffnung einsetzbar ist. Nach dem Drehen des Führungselements in die Rastposition liegt der Haltefinger an der Innenwand des Rohrs an und hält das Führungselement fest. Die Öffnung ist in dieser Ausführungsform somit einteilig und kann durch geeignete Werkzeuge in einem einzigen Arbeitsgang in die Wand des Rohrs eingebracht werden. Unter dem Begriff 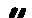 nach außen" ist hier eine radial zu einem - durch das Führungselement gesteckten - Finger verlaufende Richtung zu verstehen.

Das Führungselement kann außerdem einen äußeren Halteflansch aufweisen, der sich vom Mittelteil des Führungselements nach außen über die Öffnung hinaus erstreckt. Er stellt somit ein Gegenlager für den Haltefinger dar. Ist das Führungselement in der Rastposition, liegt das Rohr zwischen dem Haltefinger und dem Halteflansch und ist dort eingeklemmt. Der Halteflansch erstreckt sich vorzugsweise um das Führungselement umlaufend über die Öffnung hinaus, um ein Eindringen von Erntegut in das Rohr durch zwischen der Öffnung und dem Führungselement verbleibende Spalte zu vermeiden.

Das Arretieren des Führungselements am Rohr erfolgt vorzugsweise durch einen Rastvorsprung des Führungselements, der in einer entsprechenden Öffnung des Rohrs eingreifend verrastbar ist. Diese Öffnung kann ein sich radial von der Öffnung nach außen erstreckender Verrastungsschlitz sein. Der Rastvorsprung ist insbesondere am äußeren Halteflansch angebracht, obwohl auch denkbar wäre, ihn auf der Innenseite des Rohres am Führungselement vorzusehen. Der Rastvorsprung rastet in der Öffnung ein und verhindert, dass sich das Führungselement in unerwünschter Weise wieder in umgekehrter Richtung in die Einsetzposition dreht.

Um das Führungselement auf dem gekrümmten Rohr drehen zu können, ohne dass unerwünschte Zwischenräume zwischen Halteflansch und Rohr verbleiben, in denen sich Erntegut ansammeln könnte, ist vorgeschlagen, den Halteflansch auf der dem Rohr zugewandten Seite, also seiner inneren Oberfläche, mit einer Krümmung zu versehen, die der Krümmung der äußeren Oberfläche des Rohrs entspricht.

Schließlich kann der Haltflansch des Führungselements mit einem Griffabschnitt mit parallel verlaufenden Oberflächen ausgestattet sein. Dadurch wird es unproblematisch möglich, das Führungselement mit einem Maulschlüssel oder einer Zange zwischen Einsetzposition und Rastposition zu verdrehen.

In den Zeichnungen ist ein nachfolgend näher beschriebenes Ausführungsbeispiel der Erfindung dargestellt. Es zeigt:

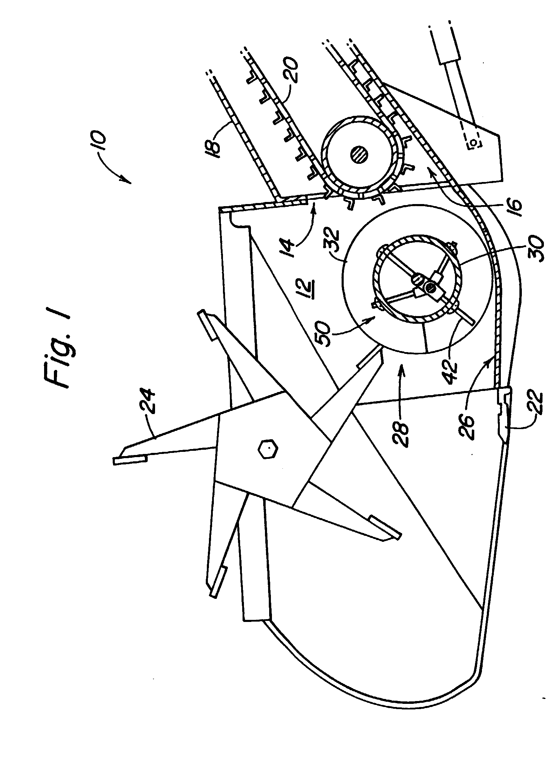

- Fig. 1: einen Schnitt durch ein Schneidwerk mit erfindungsgemäßen Führungselementen der Finger,
- Fig. 2: eine vergrößerte seitliche Ansicht des Schneckenförderers und der Einzugsfinger,
- Fig. 3: eine Ansicht der Öffnung des Schneckenförderers zur Aufnahme des erfindungsgemäßen Führungselements des Fingers,
- Fig. 4: eine perspektivische Ansicht eines erfindungsgemäßen Führungselements des Fingers,
- Fig. 5: eine seitliche Ansicht des erfindungsgemäßen Führungselements des Fingers,
- Fig. 6: eine Frontansicht des erfindungsgemäßen Führungselements des Fingers,
- Fig. 7: ein Querschnitt des erfindungsgemäßen Führungselements des Fingers im wesentlichen entlang der Linie 7-7 der Figur 6,
- Fig. 8: eine von unten betrachtete Ansicht eines erfindungsgemäßen Führungselements des Fingers, und
- Fig. 9: ein Querschnitt des erfindungsgemäßen Führungselements des Fingers, im wesentlichen entlang der Linie 9-9 in Figur 5.

Ein Schneidwerk 10 ist mit einer tragenden Struktur 12 ausgestattet, die einen Auslass 14 aufweist. Der Auslass 14 entspricht dem Einlass 16 eines Schrägförderers 18 eines Mähdreschers. Der Schrägförderer 18 ist mit einem Förderer 20 ausgestattet, um das Gut dem Mähdrescher zuzuführen. Die vordere Kante der tragenden Struktur 12 ist mit einer Mäheinrichtung 22 ausgestattet. Bei dem dargestellten Schneidwerk ist die Mäheinrichtung 22 ein verhältnismäßig konventioneller, sich hin- und herbewegender Mähwerksbalken. Wenn das Schneidwerk 10 über ein Feld bewegt wird, ergreift eine rotierende Haspel 24 die Oberseite des Guts. Die Mäheinrichtung 22 schneidet die Halme durch und das Gut fällt auf einen Boden 26 der tragenden Struktur 12. Ein sich quer erstreckender Schneckenförderer 28 zieht das abgeschnittene Gut auf dem Boden 26 des Schneidwerks 10 zur Mitte des Schneidwerks, wo es durch den Auslass 14 in den Schrägförderer 18 gefördert wird.

Der Schneckenförderer 28 umfasst ein hohles Rohr 30, das äußere Abschnitte aufweist, die mit wendelförmigen Mitnehmern 32 ausgestattet sind, um das Erntegut zu einem mittleren Abschnitt des Schneckenförderers 28 zu fördern. Der mittlere Abschnitt ist mit Öffnungen 34 versehen, die sich durch die Wand 35 des Rohrs 30 des Schneckenförderers 28 erstrecken. Im Rohr 30 des Schneckenförderers 28 ist eine exzentrische Achse 40 mit einer Vielzahl von Einzugsfingern 42 angeordnet, die durch Befestigungszusammenbauten 44 an der Achse 40 befestigt sind. Die Einzugsfinger 42 erstrecken sich durch die Öffnungen 34 im Rohr 30 des Schneckenförderers 28 und ziehen sich dorthin zurück. Die Finger 42 strecken sich aus und erfassen das zusammengeführte Erntegut, welches auf dem Boden 26 des Schneidwerks 10 liegt, und fördern es nach hinten durch den Auslass 14 in den Schrägförderer 18. Die Finger 42 ziehen sich dann zurück und geben das Gut frei, nachdem sie diese Förderkraft ausgeübt haben.

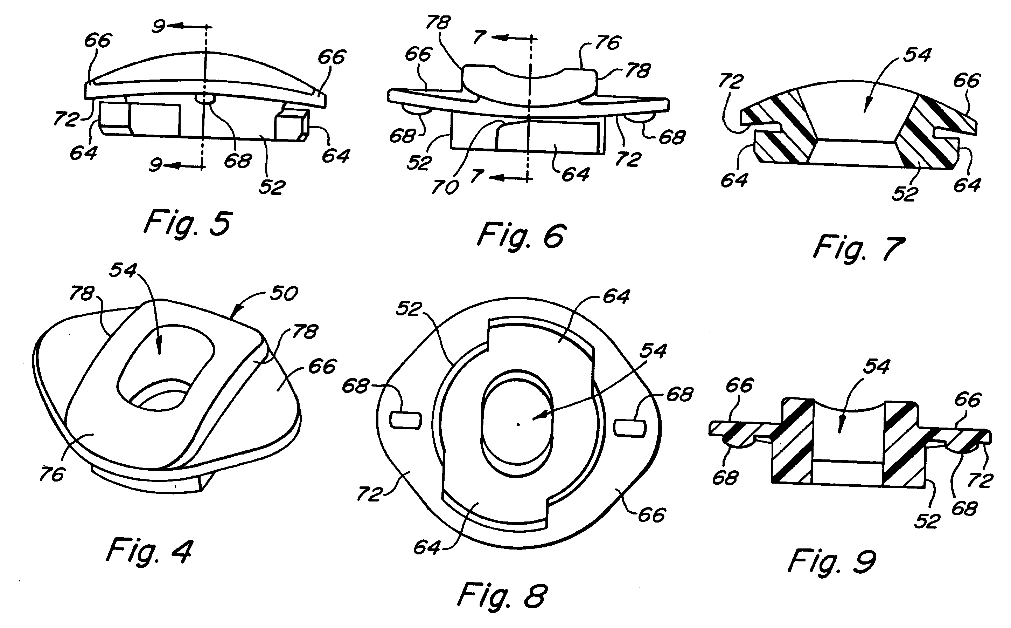

Jede der Öffnungen 34 in der Wand 35 des Rohrs 30 ist mit einem Führungselement 50 für den Finger 42 versehen. Jedes Führungselement 50 ist ein einteiliger Körper, der aus einem Material aus mehreren Komponenten gegossen oder gespritzt ist, vorzugsweise aus ESTANE 58133, einem thermoplastischen Polyurethan des Polyestertyps, das von der Fa. B.F. Goodrich Company erhältlich ist. Das Führungselement 50 umfasst einen Mittelteil 52, durch den sich eine Bohrung 54 erstreckt. Die Bohrung 54 ist in Figur 7 mit einer Sanduhrform dargestellt, die dem Einzugsfinger 42 erlaubt, sich innerhalb der Bohrung 54 relativ zum Führungselement 50 zu drehen. Das Führungselement 50 des Fingers 42 ist mit Merkmalen ausgestattet, die es ermöglichen, das Führungselement 50 des Fingers 42 an der Wand 35 des Rohrs 30 ohne separate Befestigungselemente anzubringen.

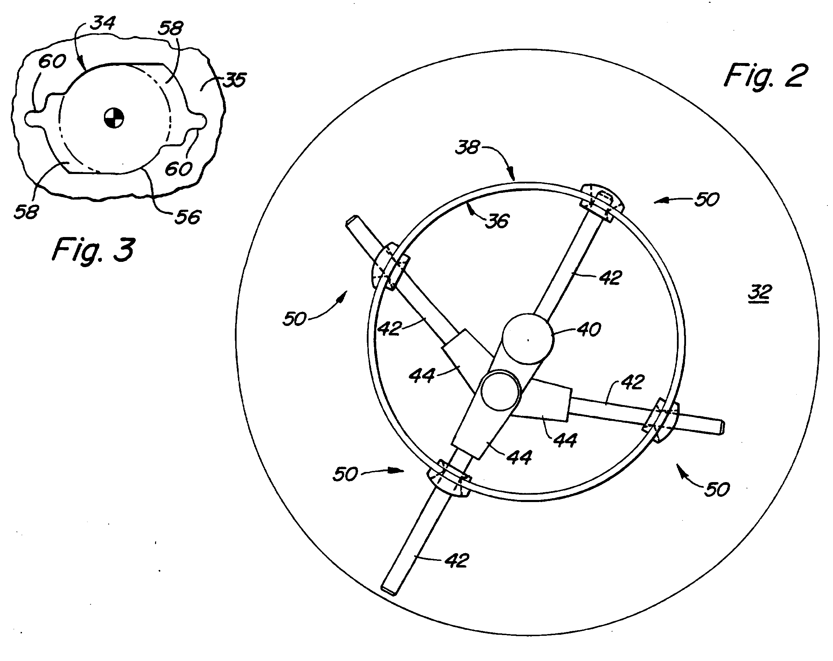

In Figur 3 ist die Öffnung 34 in der Wand 35 des Rohrs 30 des Schneckenförderers 28 dargestellt. Die Öffnung 34 hat einen mittleren Bereich 56, der im wesentlichen kreisförmig ist und in Figur 3 teilweise in gestrichelten Linien gezeigt wird. Die Öffnung 34 umfasst außerdem Flügelabschnitte 58, die sich vom mittleren Bereich 56 radial nach außen erstrecken. Die Begriffe 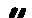 radial" und 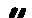 axial" beziehen sich auf eine Achse, die sich durch die Mitte der Öffnung 34 senkrecht zur Oberfläche des Rohrs 30 erstreckt. Verrastungsschlitze 60 erstrecken sich von den Flügelabschnitten 58 radial nach außen.

Der Mittelteil 52 des Führungselements 50 ist bemessen, in den mittleren Bereich 56 der Öffnung 34 zu passen und um die Achse der Öffnung 34 drehbar zu sein. Das Führungselement 50 des Fingers 42 hat innere Haltefinger 64, die sich vom Mittelteil 52 radial nach außen erstrecken. Die inneren Haltefinger 64 sind bemessen, in den Flügelabschnitten 58 der Öffnung 34 aufgenommen zu werden. Das Führungselement 50 hat weiterhin einen äußeren Halteflansch 66, der sich radial vom Mittelteil 52 nach außen erstreckt. Der äußere Halteflansch 66 hat eine Größe, die größer als die der Öffnung 34 ist, um zu verhindern, dass das Führungselement 50 vollständig durch die Öffnung 34 geführt wird. Der äußere Halteflansch 66 umfasst weiterhin Rastvorsprünge 68, die in den Verrastungsschlitzen 60 der Öffnung 34 an der Wand 35 des Rohrs 30 anliegen. Der äußere Halteflansch 66 erstreckt sich um die ganze Öffnung 34 herum radial über die Öffnung 34 hinaus, um die Öffnung 34 ganz zu verdecken, sobald das Führungselement 50 angebracht ist.

Das Führungselement 50 wird an der Wand 35 des Rohrs 30 befestigt, indem zuerst die inneren Haltefinger 64 mit den Flügelabschnitten 58 der Öffnung 34 ausgerichtet werden. Dies ist eine Einsetzposition des Führungselements 50. In dieser Einsetzposition sind die Rastvorsprünge 68 um etwa 90 Grad gegenüber den Verrastungsschlitzen 60 verdreht orientiert. Nachdem die inneren Haltefinger 64 in die Öffnung 34 eingesetzt sind, wird das Führungselement 50 um etwa 90 Grad im Uhrzeigersinn - bezüglich der in Figur 3 gezeigten Öffnung 34 - in eine Rastposition gedreht. Die Drehung des Führungselements 50 bewegt die inneren Haltefinger 64 in die Nähe der Wand 35 des Rohrs 30 des Schneckenförderers 28, nahe der Öffnung 34. Dadurch wird die Wand 35 des Rohrs 30 zwischen den inneren Haltefingern 64 und dem äußeren Halteflansch 66 eingeschlossen oder gefangen, um das Führungselement 50 am Rohr 30 des Schneckenförderers 28 anzubringen. Wenn das Führungselement 50 in die Rastposition gedreht wird, werden sich die Rastvorsprünge 68 in die Verrastungsschlitze 60 setzen, um eine Drehung des Führungselements 50 in umgekehrter Richtung in die Einsetzposition zu unterbinden, in der das Führungselement 50 aus der Öffnung 34 entnommen werden kann.

Die inneren Haltefinger 64 haben eine abgeschrägte vorlaufende Kante 70, um die Bewegung der inneren Haltefinger 64 an der Wand 35 des Rohrs 30 zu erleichtern. Die inneren Haltefinger 64 ziehen das Führungselement 50 in die Öffnung 34 und drücken den äußeren Halteflansch 66 gegen die äußere Oberfläche des Rohrs 30, um die Rastvorsprünge 68 stabil in den Verrastungsschlitzen 60 zu haltern. Der äußere Halteflansch 66 hat eine ballige innere Oberfläche 72, die der gekrümmten äußeren Oberfläche des Rohrs 30 des Schneckenförderers 28 entspricht.

Der äußere Halteflansch 66 hat einen erhabenen Griffabschnitt 76, der parallele Seitenoberflächen 78 bildet. Diese Seitenoberflächen 78 können durch ein Paar Schenkel einer Zange oder einen Schraubenschlüssel mit offenem Ende ergriffen werden, um das Führungselement 50 zu installieren oder zu entfernen.

Die einteilig und besonders geformte Öffnung 34 und der Aufbau des Führungselements 50 erlauben, das Führungselement 50 ohne zusätzliche Befestigungselemente am Rohr 30 des Schneckenförderers 28 anzubringen. Dadurch erübrigen sich die gegenwärtig verwendeten Befestigungselemente zur Anbringung des Führungselements 50. Zahlreiche Vorteile sind mit den erfindungsgemäßen Führungselementen 50 verbunden, einschließlich einer Kostenverminderung durch das Vermeiden separater Befestigungselemente, leichtere und schnellere Anbringung in der Herstellungsfabrik, weniger in der Fabrik durchzuführende Lagerhaltung, und leichteres und schnelleres Ersetzen bei Wartungsarbeiten im Feld. Außerdem kann ein Austausch des Führungselements im Feld mit gewöhnlichen Handwerkzeugen durchgeführt werden, ohne dass eine Beschädigung des Rohrs 30 des Schneckenförderers 28 möglich ist.

Die dargestellte Ausführungsform ist nur ein Beispiel der Erfindung. Verschiedene Abwandlungen sind denkbar. Beispielsweise muss der Mittelteil 52 des Führungselements 50 nicht kreisförmig sein. Er kann andere Querschnitte haben, wie z. B. ein Sechseck, solange es möglich ist, das Führungselement 50 in der Öffnung 34 zwischen der Einsetzposition und der Rastposition zu drehen. Außerdem kann der äußere Halteflansch 66 durch einen oder mehrere beabstandete, radial verlaufende Finger ersetzt werden, die sich über die äußere Oberfläche des Rohrs 30 in der Nähe der Öffnung 34 erstrecken.

## Patentansprüche

1. Führungselement (50) für einen Finger (42) eines Förderers, insbesondere eines Schneckenförderers (28), das in eine Öffnung (34) eines Rohrs (30) des Förderers einsetzbar ist, dadurch gekennzeichnet, dass das Führungselement (50) in der Öffnung (34) verrastbar ist.

2. Führungselement (50) nach Anspruch 1, dadurch gekennzeichnet, dass es derart geformt ist, dass es zwischen einer Einsetzposition, in der sie in die Öffnung (34) einsetz- und daraus entnehmbar ist, und einer Rastposition, in der es in der Öffnung (34) arretiert ist, drehbar ist.

3. Führungselement (50) nach Anspruch 1 oder 2, dadurch gekennzeichnet, dass es einteilig ist.

4. Führungselement (50) nach Anspruch 2 oder 3, dadurch gekennzeichnet, dass es um eine sich radial zum Rohr (30) des Förderers erstreckende Achse zwischen der Einsetzposition und der Rastposition verdrehbar ist.

5. Führungselement (50) nach einem der vorhergehenden Ansprüche, dadurch gekennzeichnet, dass es einen Mittelteil (52), der in einen mittleren Bereich (56) der Öffnung (34) einsetzbar ist, und mindestens einen inneren Haltefinger (64), der in der Einsetzposition in einen sich nach außen erstreckenden Flügelabschnitt (58) der Öffnung (34) einsetzbar ist, aufweist.

6. Führungselement (50) nach Anspruch 5, dadurch gekennzeichnet, dass der innere Haltefinger (64) in der Rastposition an der inneren Wand des Rohrs (30) anliegt.

7. Führungselement (50) nach einem der vorhergehenden Ansprüche, dadurch gekennzeichnet, dass es einen äußeren Halteflansch (60) aufweist, der sich vom Mittelteil (52) nach außen seitlich über die Öffnung (34) hinaus erstreckt.

8. Führungselement (50) nach einem der vorhergehenden Ansprüche, dadurch gekennzeichnet, dass es mindestens einen Rastvorsprung (68) aufweist, der eingerichtet ist, in der Rastposition in eine Öffnung des Rohrs (30) einzugreifen, insbesondere in einen Verrastungsschlitz (60) der Öffnung (34).

9. Führungselement (50) nach Anspruch 7 oder 8, dadurch gekennzeichnet, dass der äußere Halteflansch (66) eine gekrümmte innere Oberfläche (72) aufweist, die der äußeren Oberfläche des Rohrs (30) entspricht.

10. Führungselement (50) nach einem der Ansprüche 7 bis 9, dadurch gekennzeichnet, dass der äußere Halteflansch (66) einen Griffabschnitt (76) mit parallel verlaufenden seitlichen Oberflächen (78) aufweist.

11. Förderer, insbesondere Schneckenförderer (28) für ein Schneidwerk (10), mit einem Führungselement (50) nach einem der vorhergehenden Ansprüche.
